(19) Europäisches Patentamt
European Patent Office
Office européen des brevets

(11) Veröffentlichungsnummer: **0 479 179 B1**

(12) **EUROPÄISCHE PATENTSCHRIFT**

(45) Veröffentlichungstag der Patentschrift: **22.03.95**

(51) Int. Cl.[6]: **C08G 77/62**, C07F 7/12, C04B 35/58

(21) Anmeldenummer: **91116634.6**

(22) Anmeldetag: **30.09.91**

# (54) Verfahren zur Herstellung von polymeren Chlorsilazanen.

(30) Priorität: **04.10.90 DE 4031315**

(43) Veröffentlichungstag der Anmeldung:
**08.04.92 Patentblatt 92/15**

(45) Bekanntmachung des Hinweises auf die Patenterteilung:
**22.03.95 Patentblatt 95/12**

(84) Benannte Vertragsstaaten:
**CH DE FR GB IT LI**

(56) Entgegenhaltungen:
**EP-A- 0 312 825**
**EP-A- 0 351 747**
**EP-A- 0 372 377**
**EP-A- 0 372 379**
**EP-A- 0 375 974**

(73) Patentinhaber: **HOECHST AKTIENGESELLSCHAFT**
**D-65926 Frankfurt (DE)**

(72) Erfinder: **Vaahs, Thilo, Dr.**
**Am Flachsland 54**
**W-6233 Kelkheim (Taunus) (DE)**
Erfinder: **Kleiner, Hans-Jerg, Dr.**
**Altkönigstrasse 11a**
**W-6242 Kronberg/Taunus (DE)**

EP 0 479 179 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von polymeren Chlorsilazanen durch Umsetzung von oligomeren Silazanen mit mindestens einem Chlorsilan. Diese Umsetzung ist unter Atmosphärendruck bereits aus EP-A-312 825, EP-A-351 747, EP-A-372 377, EP-A-375 974 und EP-A-372 379 bekannt. Dabei wird jedoch stets eine gewisse Menge an unlöslichem Ammoniumchlorid gebildet. Dieses muß abfiltriert werden, oder es sublimiert an kältere Teile der Apparatur, wobei sich leicht die abführenden Leitungen zusetzen. Zusätzlich ist ein starker Rückfluß bei dieser Art der Herstellung notwendig.

Weiterhin wird erwähnt, daß auch bei Drücken bis 10 bar gearbeitet werden kann, was allerdings nichts am Auftreten der unlöslichen Rückstände ändert.

All diese Nachteile werden überraschenderweise durch die Ausführung der Reaktion unter einem Druck von mindestens 30 bar vermieden.

Gegenstand der vorliegenden Erfindung ist daher ein Verfahren zur Herstellung von polymeren Chlorsilazanen durch Umsetzung von oligomeren Silazanen der Formel (I)

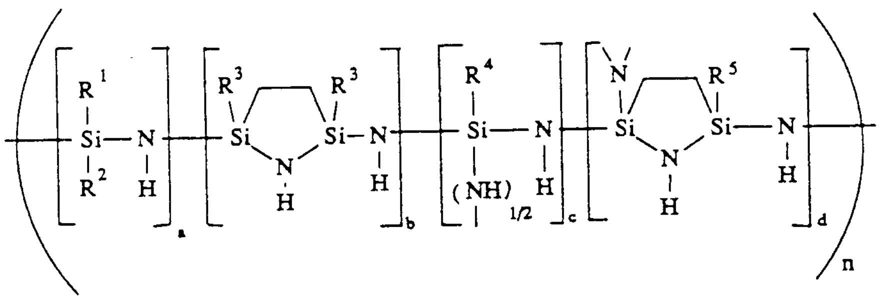

worin die Indices a, b, c und d die Molfraktionen der jeweiligen Struktureinheiten repräsentieren, wobei a + b + c + d = 1 ist, und

worin mindestens einer der Indices a und b ungleich 0 ist und n 2 bis 12 ist, mit mindestens einem der Chlorsilane $Cl_2R^6Si\text{-}CH_2CH_2\text{-}SiR^6Cl_2$, $Cl_3Si\text{-}CH_2CH_2\text{-}SiR^7Cl_2$, $R^8SiCl_3$ oder $R^9SiHCl_2$, wobei unabhängig voneinander $R^1$, $R^2$, $R^4$, $R^8$, $R^9$ = H, $C_1$-$C_6$-Alkyl oder $C_2$-$C_6$-Alkenyl und $R^3$, $R^5$, $R^6$, $R^7$ = $C_1$-$C_6$-Alkyl oder $C_2$-$C_6$-Alkenyl ist, dadurch gekennzeichnet, daß man die Umsetzung bei mindestens 30 bar und 250 bis 400 °C vornimmt. Vorzugsweise führt man die Umsetzung bei mindestens 50 bar und 280 bis 320 °C durch.

Mindestens ein Teil des Druckes wird durch den Dampfdruck der im Reaktionsgefäß befindlichen Substanzen bei der gewählten Reaktionstemperatur erzeugt, d. h. durch deren "Eigendruck". Wenn der Eigendruck bei der Reaktionstemperatur bereits mindestens 30 bar beträgt, dann ist es nicht erforderlich, durch Zugabe von $N_2$ oder Edelgas, insbesondere Argon, einen höheren Druck als den Eigendruck zu erzeugen; aber manchmal kann es vorteilhaft sein. Wenn aber der Eigendruck bei der gewählten Reaktionstemperatur weniger als 30 bar beträgt, dann erzeugt man durch die erwähnte Zugabe von Inertgas einen Gesamtdruck von mindestens 30 bar im Reaktionsgefäß. Im allgemeinen wird man dabei nicht über 150 bar Gesamtdruck gehen.

Der maximal mögliche Wert des Eigendrucks hängt von den eingesetzten Substanzen (oligomeres Silazan, Chlorsilan und vorzugsweise außerdem eingesetztes Lösungsmittel) ab und würde jeweils bei Anwendung einer Temperatur von 400 °C erreicht, wenn man eine solche Temperatur anwenden würde, was aber nicht bevorzugt ist.

Für die Reste $R^1$ bis $R^9$ in den miteinander umgesetzten Verbindungen gilt vorzugsweise: $R^1$, $R^2$, $R^4$, $R^8$, $R^9$ = H, $C_1$-$C_3$-Alkyl oder $C_2$-$C_3$-Alkenyl und $R^3$, $R^5$, $R^6$, $R^7$ = $C_1$-$C_3$-Alkyl oder $C_2$-$C_3$-Alkenyl.

Die als Ausgangsprodukte eingesetzten oligomeren Silazane der Formel (I) können dadurch erhalten werden, daß man überschüssigen Ammoniak mit einem Ausgangsmaterial, das mindestens eine der beiden Komponenten (II) $R^1R^2SiCl_2$ und (III) $Cl_2R^3Si\text{-}CH_2CH_2\text{-}SiR^3Cl_2$ enthält und ferner (IV) $R^4SiCl_3$ und (V) $Cl_3Si\text{-}CH_2CH_2\text{-}SiR^5Cl_2$ enthalten kann, bei -70 °C bis 100 °C umsetzt, wobei $R^1$ bis $R^5$ die obigen Bedeutungen annehmen kann und der molare prozentuale Anteil von (II) oder (III) oder deren Gemisch 30 bis 100 Mol-% beträgt. Dies entspricht den folgenden Werten der Molfraktionen a, b, c, d im oligomeren Silazan:

a + b = 0,3 bis 1,0     c + d = 0,0 bis 0,7

wobei a = 0 oder b = 0 sein kann, aber niemals a und b gleichzeitig den Wert 0 annehmen. Dagegen

können c und d auch gleichzeitig den Wert 0 annehmen. Genau dann, wenn ein Chlorsilan (IV) eingesetzt wird, ist c > 0. Analog ist d > 0 genau dann, wenn ein Chlorsilan (V) eingesetzt wird.

Die als Ausgangsmaterialien für die oligomeren Silazane eingesetzten Verbindungen (II) und (IV) sind im Handel erhältlich, die ethylenverbrückten Spezies (III) und (V) sind durch Hydrosilylierung von handelsüblichem $R^3HSiCl_2$ und Ethin zugänglich, bzw. durch Hydrosilylierung von Vinyltrichlorsilan und $R^5HSiCl_2$.

Vorzugsweise beträgt bei der Umsetzung zum polymeren Chlorsilazan das molare Verhältnis der Reaktanten Chlorsilan : Monomereinheit des oligomeren Silazans (n = 1) etwa 0,1 : 1 bis etwa 1,5 : 1, insbesondere etwa 0,1 : 1 bis etwa 0,7 : 1.

Zusätzlich ist es vorteilhaft, die Reaktion in einem Lösungsmittel durchzuführen, welches nicht mit den Reaktionskomponenten reagiert. Geeignet sind Ether oder Kohlenwasserstoffe. Die Reaktion im Lösungsmittel besitzt den Vorteil, daß das entstandene feste Polysilazan nicht aus dem Reaktionsgefäß herausgelöst werden muß, sondern schon in Lösung vorliegt und somit das Reaktionsgefäß in einfacher Weise zu beschicken und zu entleeren ist.

Die erfindungsgemäß hergestellten Chlorsilazane können durch Behandlung mit $NH_3$ und anschließende Pyrolyse in $Si_3N_4$ enthaltendes Material überführt werden, wie in DE-OS 38 40 779 beschrieben.

Beispiele

Beispiel 1

Reaktion von $-(-CH_3SiH-NH-)-_n$ mit $CH_3SiHCl_2$ ohne Lösungsmittel

50 g (0,85 mol; bezogen auf n = 1) $-(-CH_3SiH-NH-)-_n$, d. h. Verbindung (I) mit a = 1 und b = c = d = 0, wurden bei -15 °C mit 20 ml (22,3 g; 0,19 mol) $CH_3SiHCl_2$ versetzt und vollständig vermischt. Nach dem Auftauen gab man die Reaktionsmischung in einen 250 ml fassenden VA-Autoklaven, wobei dieser vor und während des Einfüllens mit trockenem Stickstoff gespült wurde.

Nach dem Verschließen wurde innerhalb von 4 Stunden auf 300 °C Innentemperatur aufgeheizt. Diese Temperatur wurde 2 Stunden beibehalten, und anschließend ließ man abkühlen.

Der Enddruck bei 300 °C betrug dabei 156 bar. Nach dem Entspannen wurde der Autoklav geöffnet und das feste polymere Silazan mit Tetrahydrofuran unter Schutzgas herausgelöst und anschließend von Lösungsmittel befreit.

Dabei blieb eine glasige Substanz zurück, die einen definierten Erweichungspunkt von 125 °C aufwies.

| | | |
|---|---|---|
| Elementaranalyse (Gew.-%) | Si | 42,1 % |
| | N | 15,3 % |
| | Cl | 18,9 % |
| | C | 15,2 % |
| | H | 7,3 % |

Die keramische Ausbeute in $N_2$ betrug 72 %, dabei enthielt die so hergestellte schwarze Keramik Kohlenstoffanteile von 11,4 %.

Die keramische Ausbeute in $NH_3$ betrug 56 %, wobei die so hergestellte Keramik keinen Kohlenstoff mehr enthielt.

Beispiel 2

Reaktion von $-(-CH_3SiH-NH-)-_n$ mit $CH_3SiHCl_2$ in Diphenylmethan

50 g (0,85 mol; bezogen auf n = 1) $-(-CH_3SiH-NH-)-_n$, d. h. Verbindung (I) mit a = 1 und b = c = d = 0, wurden in 50 ml Diphenylmethan gelöst und bei 20 °C mit 22,3 g (0,19 mol) $CH_3SiHCl_2$ vermischt.

Diese Lösung wurde in einem 250 ml fassenden VA-Autoklaven gegeben, der vorher mit Stickstoff gespült wurde. Nach dem Verschließen des Autoklaven wurde innerhalb von 4 Stunden auf 300 °C aufgeheizt. Die Temperatur wurde 3 Stunden gehalten, und anschließend ließ man abkühlen. Der Enddruck bei 300 °C betrug dabei 190 bar. Nach Öffnen des Autoklaven wurde die klare Lösung vom Lösungsmittel befreit.

Zurück blieben 67 g einer klaren, glasartig erstarrten Substanz mit einem Erweichungspunkt von 150 °C.

| Elementaranalyse (Gew.-%) | | |
|---|---|---|
| | Si | 41,7 % |
| | N | 15,1 % |
| | Cl | 20,9 % |
| | C | 14,8 % |
| | H | 7,1 % |

Beispiel 3

Es wurde mit 50 ml Diphenylmethan als Lösungsmittel gearbeitet wie in Beispiel 2, jedoch mit folgenden Reaktanten:
50 g (0,35 mol)

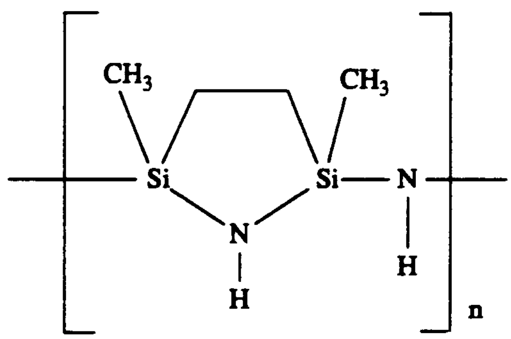

(Verbindung (I) mit a = c = d = 0 und b = 1)
10,2 g (0,07 mol) $CH_3SiCl_3$
Enddruck: 45 bar (mit Hilfe von zugegebenem $N_2$ eingestellt)
Ausbeute: 45 g polymeres Chlorsilazan mit Erweichungspunkt von ca. 115 °C.

| Elementaranalyse (Gew.-%) | | |
|---|---|---|
| | Si | 38,4 % |
| | C | 26,8 % |
| | N | 13,2 % |
| | Cl | 10,4 % |
| | O | 0,7 % |

Beispiel 4

Es wurde mit 50 ml Diphenylmethan als Lösungsmittel gearbeitet wie in Beispiel 2, jedoch mit folgenden Reaktanten:
50 g (0,35 mol)

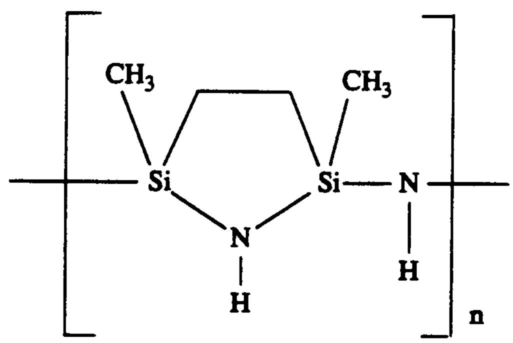

(Verbindung (I) mit a = c = d = 0 und b = 1)
17,7 g (0,07 mol) $Cl_2(CH_3)Si\text{-}CH_2CH_2\text{-}Si(CH_3)Cl_2$
Enddruck: 100 bar (mit Hilfe von zugegebenem $N_2$ eingestellt)
Ausbeute: 51,4 g polymeres Chlorsilazan mit Erweichungspunkt ca. 130 °C.

| Elementaranalyse (Gew.-%) | | |
|---|---|---|
| | Si | 37,1 % |
| | C | 28,2 % |
| | N | 12,2 % |
| | Cl | 9,9 % |

Beispiel 5

Es wurde mit 50 ml Diphenylmethan als Lösungsmittel gearbeitet wie in Beispiel 2, jedoch mit folgenden Reaktanten:
50 g

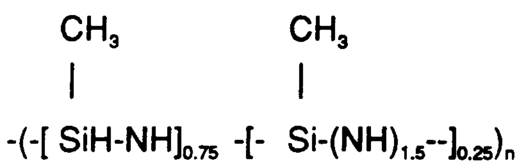

(Verbindung (I) mit a = 0,75, c = 0,25 und b = d = 0)
38,1 g (0,23 mol) Vinyltrichlorsilan
Enddruck: 104 bar (ohne Inertgas-Zugabe, d. h. nur Eigendruck)
Ausbeute: 56,4 g polymeres Chlorsilazan mit Erweichungspunkt von ca. 125 °C.

| Elementaranalyse (Gew.-%) | | |
|---|---|---|
| | Si | 39,4 % |
| | C | 16,8 % |
| | N | 15,4 % |
| | Cl | 14,3 % |

Beispiel 6

Es wurde mit 50 ml Diphenylmethan als Lösungsmittel gearbeitet wie in Beispiel 2, jedoch mit folgenden Reaktanten:
50 g

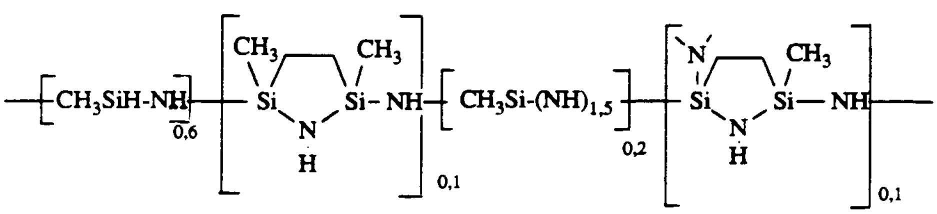

(Verbindung (I) mit a = 0,6, b = 0,1 und c = 0,2 und d = 0,1)
40,3 g (0,25 mol) Vinyltrichlorsilan
Enddruck: 95 bar (ohne Inertgas-Zugabe, d. h. nur Eigendruck)
Ausbeute: 61,4 g polymeres Chlorsilazan mit Erweichungspunkt von ca. 165 °C.

| | | |
|---|---|---|
| Elementaranalyse (Gew.-%) | Si | 38,5 % |
| | C | 18,3 % |
| | N | 16,1 % |
| | Cl | 12,9 % |

## Patentansprüche

1. Verfahren zur Herstellung von polymeren Chlorsilazanen durch Umsetzung von oligomeren Silazanen der Formel (I)

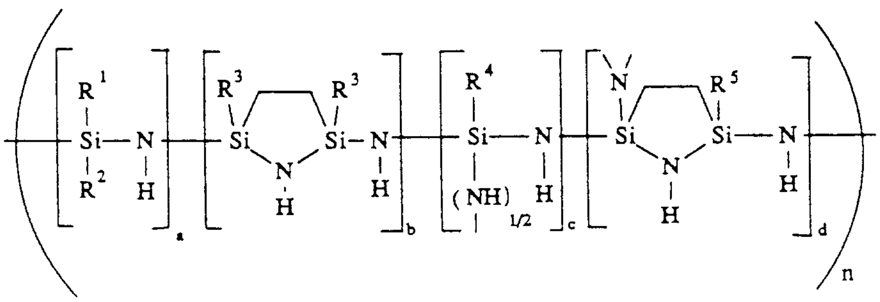

worin die Indices a, b, c und d die Molfraktionen der jeweiligen Struktureinheiten repräsentieren, wobei a + b + c + d = 1 ist, und worin mindestens einer der Indices a und b ungleich 0 ist und n 2 bis 12 ist, mit mindestens einem der Chlorsilane $Cl_2R^6Si\text{-}CH_2CH_2\text{-}SiR^6Cl_2$, $Cl_3Si\text{-}CH_2CH_2\text{-}SiR^7Cl_2$, $R^8SiCl_3$ oder $R^9SiHCl_2$,wobei unabhängig voneinander $R^1$, $R^2$, $R^4$, $R^8$, $R^9$ = H, $C_1$-$C_6$-Alkyl oder $C_2$-$C_6$-Alkenyl und $R^3$, $R^5$, $R^6$, $R^7$ = $C_1$-$C_6$-Alkyl oder $C_2$-$C_6$-Alkenyl ist, dadurch gekennzeichnet, daß man die Umsetzung bei mindestens 30 bar und 250 bis 400 °C vornimmt.

2. Verfahren nach Anspruch 1, dadurch gekennzeichnet, daß man die Umsetzung bei mindestens 50 bar und 280 bis 320 °C durchführt.

3. Verfahren nach einem der Ansprüche 1 und 2, dadurch gekennzeichnet, daß man die Reaktion in einem Ether oder Kohlenwasserstoff durchführt.

## Claims

1. A process for the preparation of polymeric chlorosilazanes by reaction of oligomeric silazanes of the formula (I)

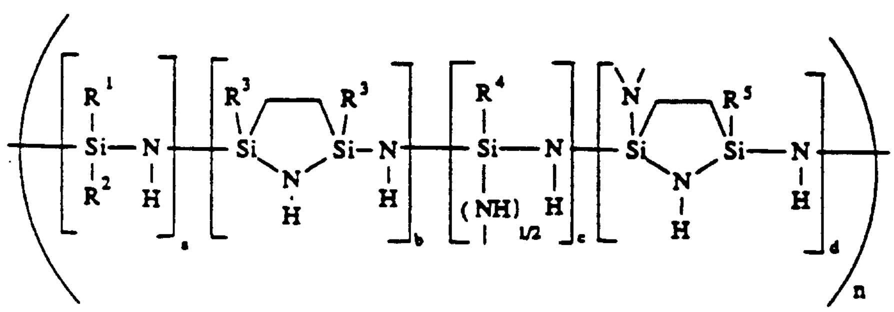

in which the indices a, b, c and d represent the mole fractions of the respective structural units, where a + b + c + d = 1, and in which at least one of the indices a and b is not 0 and n is 2 to 12, with at least one of the chlorosilanes $Cl_2R^6Si\text{-}CH_2CH_2\text{-}SiR^6Cl_2$, $Cl_3Si\text{-}CH_2CH_2\text{-}SiR^7Cl_2$, $R^8SiCl_3$ or $R^9SiHCl_2$, in which, independently of one another, $R^1$, $R^2$, $R^4$, $R^8$ and $R^9$ = H, $C_1$-$C_6$-alkyl or $C_2$-$C_6$-alkenyl and $R^3$, $R^5$, $R^6$ and $R^7$ = $C_1$-$C_6$-alkyl or $C_2$-$C_6$-alkenyl, which comprises carrying out the reaction under at least 30 bar at 250 to 400 °C.

2. The process as claimed in claim 1, wherein the reaction is carried out under at least 50 bar at 280 to 320 °C.

3. The process as claimed in one of claims 1 and 2, wherein the reaction is carried out in an ether or hydrocarbon.

**Revendications**

1. Procédé de préparation de polymères de chlorosilazanes par réaction de silazanes oligomères de formule (I) :

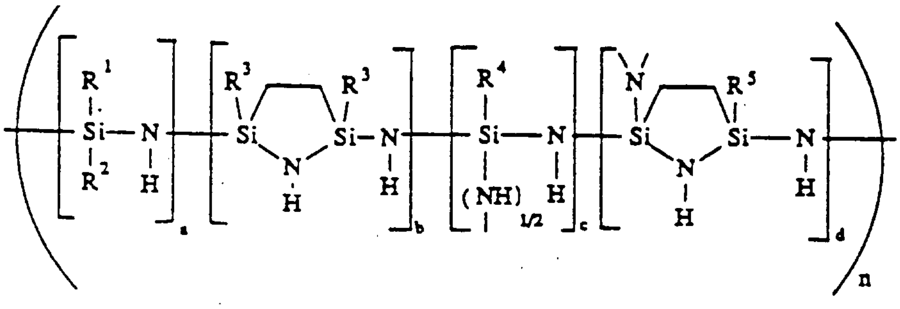

(dans laquelle les indices a, b, c et d représentent les fractions molaires des divers motifs de structure; la somme (a + b + c + d) vaut 1, et au moins l'un des indices a et b est différent de 0 et n vaut 2 à 12) avec au moins l'un des chlorosilanes
$Cl_2R^6Si\text{-}CH_2CH_2\text{-}SiR^6Cl_2$, $Cl_3Si\text{-}CH_2CH_2\text{-}SiR^7Cl_2$, $R^8SiCl_3$ ou $R^9SiHCl_2$,
(formules dans lesquelles, indépendamment l'un de l'autre, les symboles $R^1$,$R^2$,$R^4$,$R^8$ et $R^9$ représentent chacun H, un groupe alkyle en $C_1$ à $C_6$ ou alcényle en $C_2$ à $C_6$, et les symboles $R^3$,$R^5$,$R^6$,$R^7$ représentent chacun un groupe alkyle en $C_1$ à $C_6$ ou alcényle en $C_2$ à $C_6$, procédé caractérisé en ce qu'on effectue la réaction sous une pression d'au moins 30 bars et à une température de 250 à 400 °C.

2. Procédé selon la revendication 1, caractérisé en ce qu'on effectue la réaction sous une pression d'au moins 50 bars et à une température de 280 à 320 °C.

3. Procédé selon l'une des revendications 1 et 2, caractérisé en ce qu'on effectue la réaction dans un éther ou dans un hydrocarbure .